# EUROPÄISCHE PATENTANMELDUNG

(11) **EP 4 635 920 A1**
(43) Veröffentlichungstag der Anmeldung: **22.10.2025**
(21) Anmeldenummer: 25163076.0
(22) Anmeldetag: 11.03.2025
(51) Int. Cl.: C03C 3/091, C03C 4/10

(54) **SCHEIBE FÜR DIE VERWENDUNG ALS ÄUSSERE SCHUTZSCHEIBE EINES FUNKTIONSDACHES, IHRE VERWENDUNG UND FUNKTIONSDÄCHER**

(30) Priorität: 15.04.2024 DE 102024110513
(71) Anmelder: SCHOTT Technical Glass Solutions GmbH, 07745 Jena (DE)
(72) Erfinder: BRANDT-SLOWIK, Juliane, 07745 Jena (DE); WIESEKE, Hubert, 07745 Jena (DE); ZACHAU, Thilo, 07745 Jena (DE)
(74) Vertreter: Schott Corporate IP

(57) **Zusammenfassung**

Die Erfindung betrifft eine Glasscheibe zur Verwendung als äußere Schutzscheibe eines Funktionsdaches.

## Beschreibung

### Gebiet der Erfindung

Die vorliegende Anmeldung betrifft eine Scheibe für die Verwendung als äußere Schutzscheibe eines Funktionsdaches, ihre Verwendung und Funktionsdächer mit ihr.

### Hintergrund der Erfindung

Scheiben, die Glas umfassen oder aus Glas bestehen, können in vielfältigen Anwendungen zum Einsatz kommen, beispielsweise in Fahrzeugscheiben, in Architekturanwendungen oder als Abdeckungen für elektronische Geräte.

So beschreiben EP3157774 A1 und WO19008471 A1 und auch DE 20 2020 107 193 U1 Panoramawindschutzscheiben und laminierte Automobildächer und Panoramadächer. WO15059406 A1 beschreibt eine Verbundscheibe, insb. als Heckscheibe oder Dachscheibe eines Fahrzeugs.

Gebäude- oder Fahrzeugverglasungen, die Durchblick ermöglichen, werden mehr und mehr von reinen Fenstern zu Flächen, die weitere Funktionen erfüllen wie beispielsweise Abschattung, so sog. Switchable Windows oder Privacy Windows, oder Energiegewinnung, so beispielsweise Solarfenster. Solche Funktionseinheiten benötigen einen ausreichenden Schutz.

Nicht nur für statische Anwendungen, beispielsweise bei Verglasungen von Gebäuden und Gebäudeteilen, sondern auch für mobile Anwendungen, beispielsweise im Automobilsektor, ist, um die genannten Funktionseinheiten zu schützen, eine große Robustheit gegen die verschiedensten Einflüsse gefragt. Glas mit seiner mechanischen, thermischen und chemischen Beständigkeit, seinen Transmissionseigenschaften und seiner Strahlenbeständigkeit ist hier gegenüber Kunststoffen im Vorteil.

Für den Schutz der Funktionseinheiten und des durch das Funktionsdach abgedeckten Raumes spielt die mechanische Beständigkeit des Funktionsdaches, also die Eigenschaft, möglichst nicht zu brechen, zu verkratzen oder anderweitig beschädigt zu werden, bei verschiedensten Krafteinwirkungen eine Rolle. Bei Funktionsdächern, insbesondere bei solchen für mobile Anwendungen, ist eine mechanische Beständigkeit gegenüber Aufprall, also gegenüber Einwirkung von beispielsweise fallendem Hagel oder aufgewirbeltem Sand oder Splitt von besonderer Bedeutung.

Zum Schutz der Funktionseinheiten und des durch das Funktionsdach abgedeckten Raumes ist eine Temperaturkontrolle von Bedeutung. So soll es beispielsweise im Innenraum eines Fahrzeugs oder Gebäude trotz äußerer Einflüsse weder zu heiß noch zu kalt werden, und dies unabhängig von der Funktion der jeweiligen Funktionseinheit.

Diese Anforderungen sind von Schutzscheiben des Standes der Technik noch nicht ausreichend erfüllt.

### Aufgabe der Erfindung

Eine Aufgabe der Erfindung besteht daher in der Bereitstellung einer Scheibe, welche das geschilderte Anforderungsprofil für eine äußere Schutzscheibe erfüllt. Ein weiterer Aspekt besteht in der Verwendung dieser Scheibe. Ein weiterer Aspekt besteht in der Bereitstellung von Einheiten mit dieser Scheibe.

### Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen und der Beschreibung der vorliegenden Offenbarung.

Die vorliegende Erfindung betrifft eine Scheibe zur Verwendung als äußere Schutzscheibe eines Funktionsdaches, die Glas umfasst oder aus Glas besteht und die mechanische Festigkeit gegenüber Aufprall aufweist und die ein Flächengewicht (d1) von höchstens 2,45 kg/m² aufweist und wobei bei einer Dicke der Scheibe von 4 mm ihre Transmission im Wellenlängenbereich zwischen 3 µm und 12 µm in mindestens einem Intervall von mindestens 100 nm bei jeder Wellenlänge über 20% liegt.

Unter einer äußeren Scheibe eines Funktionsdaches wird die Scheibe verstanden, die in der Einheit, beispielsweise einem Gebäude oder einem Fahrzeug, in der das Funktionsdach seine Funktion erfüllt, im Kontakt mit dem Außenraum steht, dies ggf. im Gegensatz zu dem Raum, den die Einheit umschließt, dem Innenraum. Bei der Scheibe, die "in Kontakt steht", kann es sich um eine beschichtete oder unbeschichtete Scheibe handeln.

Unter einer inneren Scheibe eines Funktionsdaches wird die Scheibe verstanden, die in der Einheit, beispielsweise einem Gebäude oder einem Fahrzeug, in der das Funktionsdach seine Funktion erfüllt, im Kontakt mit dem Innenraum steht, also dem Raum, den die Einheit umschließt, also beispielsweise dem Fahrgastraum oder einem Gebäudeteil, z.B. einem Zimmer oder Wintergarten.

Die äußere Scheibe eines Funktionsdaches stellt eine Schutzscheibe dar, da sie die Einheit, in der das Funktionsdach seine Funktion erfüllt, vor äußeren Einflüssen schützt.

Die Begriffe Funktionsdach oder Funktionsfenster oder Funktionsverglasung werden in der vorliegenden Offenbarung synonym verwendet. Insbesondere muss auch das Funktionsdach nicht in der oberen Abdeckung des Raumes angeordnet sein, sondern kann an beliebigen Stellen positioniert sein. Vorzugsweise ist es in der oberen Abdeckung des Raumes, der umschlossen wird, positioniert.

Der Begriff Glasscheibe wird in der vorliegenden Offenbarung sowohl für eine Scheibe, die Glas umfasst, als auch für eine Scheibe, die aus Glas besteht, verwendet.

Unter mechanischer Festigkeit gegenüber Aufprall wird in der vorliegenden Offenbarung folgendes verstanden:
Eine Beständigkeit gegenüber Steinschlag und/oder Abrasion, z.B. Sandabrieb, die sich im Bestehen wenigstens eines der folgenden Tests a), b) zeigt:
a) Gravel-Test, der zur Simulation von Steinschlag herangezogen werden kann: Diese Steinschlagprüfung mittels Multischlagprüfung nach DIN EN ISO 20567-1:2017-07[a], Methode A and B ist ein standardisiertes Prüfverfahren und dient beispielsweise dazu, Steinschlagschäden an Fahrzeugen zu simulieren. In der Testapparatur Erichsen 508 VDA werden Prüflinge durch scharfkantige Schlagkörper (z.B. genormtes Hartgussgranulat) in rascher Folge beschossen. Die Einflussgrößen könnten entsprechend der Normvorgabe variiert werden. Dazu zählen Beschussmaterial, Druck, Beschusszeit und Aufprallwinkel. Für eine Vergleichbarkeit der Multischlagprüfung gelten die in der ISO 20567-1 geregelten Parameter. Im Rahmen der vorliegenden Offenbarung werden folgende Materialien und Einstellungen verwendet:

| | |
|---|---|
| Beschusszeit: | 2 x 10 s ± 2 s |
| Beschussmaterial: | Harteisen-Granulat gemäß DIN EN ISO 11124-2 |
| Granulatmenge: | 2 x 500 g |
| Granulatgröße: | 3,55-5,00 mm gemäß DIN EN ISO 11125-2 und DIN EN ISO 565 |
| Granulathersteller: | Eisenwerk Würth |
| Druck: | Methode A: 1,0 ± 0,1 bar; Methode B: 2,0 ± 0,1 bar |
| Aufprallwinkel: | 54° |
| Testtemperatur: | 24 °C ± 1 °C |
| Feuchtigkeit: | 50% ± 4% |
| Vorbehandlung: | mindestens 16 h bei 23 °C und 50% relativer Luftfeuchtigkeit |

Abstand zwischen Granulatbeschleunigungsrohr und Probenmitte: 290 ± 1 mm

Die Steinschlagfestigkeit ergibt sich aus dem Grad der Schädigung. Dieser kann mit Referenzbildern verglichen und einem entsprechenden Kennwert zugeordnet werden.

Der Grad der Schädigung hat aber auch Auswirkungen auf den Haze der Scheibe. Der Haze ist ein optischer Parameter zur Beschreibung des Streuverhaltens und kann nach ASTM D1003, insbesondere nach ASTM D1003:2013 bestimmt werden. Daher kann auch die Bestimmung des Haze der beschossenen Probe für ein Bestehenskriterium des Graveltests herangezogen werden.

Der Graveltest gilt als bestanden, wenn die Probe, die die geschilderte Steinschlagprüfung mittels Multischlagprüfung nach DIN EN ISO 20567-1:2017-07[a] durchlaufen hat, einen Haze von höchstens 4,0 % nach Methode A, also nach Behandlung mit einem Druck von 1 bar, oder von höchstens 8,0 % nach Methode B, also nach Behandlung mit einem Druck von 2 bar aufweist.

Bevorzugt beträgt ihr Haze nach Behandlung gemäß Methode A nur höchstens 3,0 %, besonders bevorzugt nur höchstens 2,5 %.

Bevorzugt beträgt ihr Haze nach Behandlung gemäß Methode B nur höchstens 6,0 %, besonders bevorzugt nur höchstens 5,5 %.

Dabei ist der betrachtete Haze-Wert jeweils der Mittelwert aus fünf Messungen auf wenigstens einer getesteten Scheibe, wobei die Messpunkte etwa in der Mitte der Probe und in der Nähe jeder der vier Ecken gewählt werden.
b) Sandblasting-Test, der zur Simulation von Abrasion beispielsweise durch Sandabrieb herangezogen werden kann:
Der Sandtest nach MIL-STD-810H, Methode 510.7, Prozedur II, Januar 2019-01 ist ein standardisiertes Prüfverfahren und dient beispielsweise dazu, Sandabriebschäden an Fahrzeugen zu simulieren. Dabei wird die Scheibe einem definierten Volumenstrom an Sand ausgesetzt. Im Rahmen der vorliegenden Offenbarung werden folgende Materialien und Einstellungen verwendet:

| | |
|---|---|
| Temperatur: | 23 °C ± 2 °C |
| Relative Luftfeuchtigkeit: | < 30 % |
| Windgeschwindigkeit: | 20 m/s |
| Sandkonzentration: | (2.2 ± 0.5) g/m³ |
| Sand-Produktbezeichnung: | Quarzwerke WF31 |
| Testseite: | 1 |
| Testdauer: | pro Probe 30 oder 60 oder 90 Minuten |

Der Sandblasting-Test gilt als bestanden, wenn die Probe, die den geschilderten Sandtest nach MIL-STD-810H, Methode 510.7, Prozedur II, Januar 2019-01 durchlaufen hat, einen Haze von höchstens 10 % nach 30minütiger Behandlung oder von höchstens 15 % nach 60minütiger Behandlung oder von höchstens 25 % nach 90minütiger Behandlung aufweist.

Bevorzugt beträgt ihr Haze nach 30minütiger Behandlung nur höchstens 7 %, besonders bevorzugt nur höchstens 5 %.

Bevorzugt beträgt ihr Haze nach 60minütiger Behandlung nur höchstens 12 %, besonders bevorzugt nur höchstens 10 %.

Bevorzugt beträgt ihr Haze nach 90minütiger Behandlung nur höchstens 20 %, besonders bevorzugt nur höchstens 15 %.

Dabei ist der betrachtete Haze-Wert jeweils der Mittelwert aus fünf Messungen auf wenigstens einer getesteten Scheibe, wobei die Messpunkte etwa in der Mitte der Probe und in der Nähe jeder der vier Ecken gewählt werden.

Die Scheibe weist besonders hohe mechanische Festigkeit gegenüber Aufprall auf, wenn sie sowohl den Gravel-Test als auch den Sandblasting-Test besteht.

Als Flächengewicht wird das Verhältnis von Masse und Fläche einer Schicht oder einer Platte bezeichnet. Die SI-Einheit des Flächengewichts ist kg/m². Der Wert ist also nicht auf eine bestimmte Dicke normiert, sondern wird nur normiert auf die Fläche unabhängig von der Dicke für einen Quadratmeter des jeweiligen Gegenstands angegeben. Diese Angabe ist gängig bei dünnen Produkten wie Papier oder Pappe. Mit der Angabe des Flächengewichts werden also Produkte verglichen, die sehr ähnliche Dicken haben.

Bei Scheiben, z.B. Scheiben, die Glas umfassen oder aus Glas bestehen, deren Dicken über einen großen Bereich schwanken können, ist eine solche Angabe nicht hilfreich. Selbst innerhalb eines Anwendungsbereichs wie z.B. Automobilverglasungen werden Gläser mit Dicken von 0,5 mm bis 7,5 mm eingesetzt.

Deswegen wird in dieser Offenbarung ein "Flächengewicht (dx)" für eine angegebene Dicke d = x mm der Scheibe verwendet.

Das geschilderte geringe Flächengewicht, nämlich ein Flächengewicht (d1) von höchstens 2,45 kg/m², ist insbesondere für mobile Anwendungen, insbesondere bei Funktionsdächern von beweglichen Gegenständen wie Fahrzeugen, von Bedeutung, da der Energieaufwand, der zu ihrer Bewegung nötig ist, gewichtsabhängig ist.

Das geschilderte geringe Flächengewicht ist auch insofern bei Fahrzeugen von Bedeutung, als Glasscheiben als Dachbestandteil im Vergleich zu leichteren Metalldächern den Schwerpunkt des Fahrzeugs nach oben verlagern und so die Straßenlage verschlechtern.

Das geschilderte geringe Flächengewicht ist insbesondere bei großen Funktionsdächern von Bedeutung, da dann die Gewichtseinsparung im Vergleich zu höheren Flächengewichten besonders zum Tragen kommt.

Das nach oben begrenzte Flächengewicht ermöglicht bei gleichem Gewicht größere Dicken als bei Glasscheiben mit höherem Flächengewicht, was eine vorteilhafte Stabilitätssteigerung bedeutet, oder bei gleicher Dicke, also vergleichbarer Stabilität, ein geringeres Gewicht, was für die Benutzung und Handhabung der Produkte, insbesondere bei Transport, Einbau und Montage von Vorteil ist.

Diese Effekte wirken sich bei Verbunden aus zwei oder mehr Scheiben besonders vorteilhaft aus.

Vorzugsweise weist die Scheibe ein Flächengewicht (d1) von weniger als 2,25 kg/m², bevorzugt von höchstens 2,23 kg/m², besonders bevorzugt von weniger als 2,23 kg/m² auf.

Vorzugsweise weist die Scheibe eine ausreichende chemische Beständigkeit, insbesondere eine gute hydrolytische Beständigkeit und/oder eine gute Säurebeständigkeit auf.

Unter ausreichender chemischer Beständigkeit wird verstanden, dass der Test nach DIN ISO 719/720 zur Bestimmung der Hydrolytischen Beständigkeit und der Test nach DIN 12116:2001-03 zur Bestimmung der Säurebeständigkeit jeweils als mindestens zur Klasse 2 gehörend bestanden wird.

Unter guter Hydrolytischer Beständigkeit wird verstanden, dass der Test nach DIN ISO 719/720 zur Bestimmung der Hydrolytischen Beständigkeit als mindestens zur Klasse 1 gehörend bestanden wird.

Unter guter Säurebeständigkeit wird verstanden, dass der Test nach DIN 12116:2001-03 zur Bestimmung der Säurebeständigkeit als mindestens zur Klasse 1 gehörend bestanden wird.

Unter guter chemischer Beständigkeit wird verstanden, dass der Test nach DIN ISO 719/720 zur Bestimmung der Hydrolytischen Beständigkeit und der Test nach DIN 12116:2001-03 zur Bestimmung der Säurebeständigkeit jeweils als mindestens zur Klasse 1 gehörend bestanden wird.

Ein wesentliches Merkmal der erfindungsgemäßen Scheibe ist ihr Transmissionsverhalten im IR-Bereich. Es hat sich gezeigt, dass bei Scheiben, deren Transmission im Wellenlängenbereich zwischen 3 µm und 12 µm bei einer Dicke der Scheibe von 4 mm in mindestens einem Intervall von mindestens 100 nm bei jeder Wellenlänge über 20% liegt, im Anwendungsfall das unerwünschte Aufheizen der Scheibe und des Funktionsdaches und damit auch der Funktionseinheit vermieden werden kann.

Vorzugsweise beträgt das wenigstens eine Intervall, in dem die Transmission der Scheibe im Wellenlängenbereich zwischen 3 µm und 12 µm bei einer Dicke der Scheibe von 4 mm bei jeder Wellenlänge über 20 % liegt, wenigstens 145 nm.

Bevorzugt beträgt das wenigstens eine Intervall, in dem die Transmission der Scheibe im Wellenlängenbereich zwischen 3 µm und 12 µm bei einer Dicke der Scheibe von 4 mm bei jeder Wellenlänge über 20 % liegt, wenigstens 170 nm.

Besonders bevorzugt beträgt das wenigstens eine Intervall, in dem die Transmission der Scheibe im Wellenlängenbereich zwischen 3 µm und 12 µm bei einer Dicke der Scheibe von 4 mm bei jeder Wellenlänge über 20 % liegt, wenigstens 200 nm.

Ist der Anwendungsfall so gelagert, dass die Scheibe für die Funktion der Funktionseinheit kein oder nur wenig IR-Licht durchlassen soll, wird dies gerade nicht durch Absorption, was Aufheizen bedeuten würde, sondern durch eine IR-reflektierende Folie oder Beschichtung der Scheibe, z.B. eine metallische Silberschicht, realisiert.

Bevorzugte Dicken der Glasscheibe sind mindestens 0,5 mm und höchstens 7,5 mm, besonders bevorzugte Dicken sind mindestens 1 mm und höchstens 4 mm, ganz besonders bevorzugte Dicken sind mindestens 1,75 mm und höchstens 3,8 mm, ganz besonders bevorzugte Dicken sind mindestens 1,8 mm und höchstens 3 mm.

Glasscheiben mit Dicken von 0,5 mm bis 4 mm kommen bevorzugt in mobilen Anwendungen zum Einsatz.

Glasscheiben mit Dicken von 3 mm bis 7,5 mm kommen bevorzugt in statischen Anwendungen zum Einsatz.

Bevorzugte Formate der Glasscheibe liegen zwischen 1500 mm x 800 mm und 4500 mm x 2500 mm. Besonders bevorzugt sind Formate von 2500 mm x 1500 mm bis 3000 mm x 2500 mm, für bestimmte Anwendungen wie beispielsweise Panoramadächer auch mindestens oder mehr als 3000 x 2500 mm².

Für statische Anwendungen, insbesondere für Gebäudeverglasungen, sind Formate von 3700 x 2300 mm² bis 4200 x 2450 mm² oder bis 4000 x 2450 mm² bevorzugt.

Die erfindungsgemäße Glasscheibe kann durch verschiedene Glastypen realisiert werden, beispielsweise durch alkalifreie Alumino(boro)silicatgläser, sog. AF-Gläser, durch (Lithium)Alumino(boro)silicatgläser, sog. LA(B)S-Gläser, oder durch Borosilicatgläser.

Vorteilhaft und besonders einfach zu realisieren ist das Eigenschaftsprofil der erfindungsgemäßen Scheibe, insbesondere hinsichtlich des gewünschten geringen Gewichts, aber auch der mechanischen Festigkeit und der Transmissionseigenschaften der Glasscheibe, wenn die Scheibe ein Borosilicatglas umfasst oder aus Borosilicatglas besteht.

Vorzugsweise umfasst das Borosilicatglas die folgenden Komponenten in Gew.-% auf Oxidbasis:
SiO₂ 70 - 87
B₂O₃ 7 - 25
Na₂O + K₂O 0,5 - 9
Al₂O₃ 0 - 7
CaO 0 - 3
MgO 0 - 2
oder
SiO₂ 70 - 86
Al₂O₃ 0 - 5
B₂O₃ 9,0 - 25
Na₂O 0,5 - 5,0
K₂O 0 - 1,0
Li₂O 0 - 1,0
oder
SiO₂ 78,3 - 81,0
B₂O₃ 9,0 - 13,0
Al₂O₃ 3,5 - 5,3
Na₂O 3,5 - 6,5
K₂O 0 - 2,0
CaO 0 - 2,0

Mit solchen Borosilicatglaszusammensetzungen ist es möglich, die erfindungsgemäß zur Verwendung als äußere Schutzscheibe eines Funktionsdaches geeigneten Glasscheiben mit mechanischer Festigkeit gegenüber Aufprall, einem geringen Flächengewicht und einer hohen IR-Transmission zu realisieren.

Auch ist es auf diese Weise leicht möglich, Gläser mit einem nur geringen thermischen Ausdehnungskoeffizienten zu erhalten.

Vorzugsweise weist die Glasscheibe nämlich einen Ausdehnungskoeffizienten CTE20-300 zwischen 2,5 x 10⁻⁶/K und 5,5 x 10⁻⁶/K, bevorzugt zwischen 2,7 x 10⁻⁶/K und 5,2 x 10⁻⁶/K besonders bevorzugt zwischen 3,0 x 10⁻⁶/K und 5,0 x 10⁻⁶/K, ganz besonders bevorzugt von (3,3 ± 0,1) x 10⁻⁶/K auf.

Mit einem solchen Ausdehnungskoeffizienten ist die Scheibe geeignet, mit Beschichtungen beschichtet zu werden, wie sie beispielsweise für die Innenseite der Außenscheibe von Automobilverglasungen gewünscht werden.

Mit solchen Borosilicatglaszusammensetzungen kann ein Material bereitgestellt werden, das aufgrund seiner Dielektrizitätskonstante und seines Verlustwinkels bei Frequenzen > 10 GHz geeignet ist, beispielsweise in einem in ein Dachfenster integriertem Antennensystem die Antennenstrukturen ist zu schützen, ein Aspekt, der aufgrund gewünschter Kommunikationssysteme zwischen Fahrzeugen und Satelliten immer wichtiger wird. Ein solches Material besitzt eine Transparenz für 5G/6G-Signale, was seinen Einbau in die Fahrzeughülle besonders attraktiv macht.

Die erfindungsgemäße Glasscheibe kann als selbstragende Scheibe verwendet werden. Insbesondere, wenn die erfindungsgemäße Glasscheibe nicht als selbsttragende Scheibe verwendet wird, sondern in einem Laminat, kann sie mit verschiedenen Materialien kombiniert werden, beispielsweise laminiert mit einem Natron-Kalk-Silicatglas, einem Aluminiumsilicatglas, einem Alkalialuminosilicatglas, einem Alkali-Borosilicatglas, einem Alkali-Alumophosphosilicat-Glas, einen Alkali-Aluminoborosilicatglas oder Kombinationen davon, verbunden mit einer Polymerfolie, z.B. PVB, EVA oder TPU. Das Laminat kann aus identischen Gläsern oder aus unterschiedlichen Gläsern, jedoch mit aneinander angepassten Ausdehnungskoeffizienten, oder aus Glas- und Kunststoff-Scheiben mit aneinander angepassten Ausdehnungskoeffizienten aufgebaut sein.

In einer Ausführungsform weist die Glasscheibe eine Lichttransmission Y (D65,2°) von wenigstens 91 %, vorzugsweise von wenigstens 92,5 % oder gar von wenigstens 93 % auf. Vorzugsweise ist dieser Mindestwert bezogen auf eine Glasscheibe mit einer Dicke von 5 mm.

Durch eine hohe Lichttransmission wird in besonderem Maße gewährleistet, dass die Glasscheibe in auf Transparenz ausgelegten Anwendungen eine ausgezeichnete und ungestörte Durchsicht ermöglicht.

Eine hohe Lichttransmission ist besonders wichtig für energieerzeugende Fenster, bei denen die äußeren Glasscheiben als Wellenleiter dienen in Richtung der hocheffizienten Solarzellen, die solche Paneele umgeben. Jeder Zuwachs an Übertragung wirkt sich direkt auf die Energieerzeugung aus.

Die Bezeichnungen Lichttransmission und Helligkeit (brightness) Y entsprechen der gleichen Messgröße, gemessen nach DIN 5033 im CIE Farbsystem als Y(D65, 2°).

In einer Ausführungsform weist die Glasscheibe eine Lichttransmission Y (D65,2°) von höchsten 60 %, vorzugsweise von höchsten 50 % auf. Vorzugsweise ist dieser Mindestwert bezogen auf eine Glasscheibe mit einer Dicke von 5 mm. Diese niedrige Transmission im Sichtbaren wird bevorzugt durch Zugabe von Farboxide, z.B. von Eisenoxid und/oder Ceroxid und/oder Nickeloxid und/oder Cobaltoxid und/oder Titanoxid und/oder Vanadiumoxid und/oder Manganoxid und/oder Kupferoxid und/oder Zinnoxid und/oder Molybdänoxid und/oder Chromoxid, vorzugsweise in einem Gesamtanteil von maximal 5 Gew.-% realisiert.

Die durch eine solche niedrige Transparenz erreichte Abschattung kann besonders bei Anwendungen wie Panoramadächern oder ästhetischen Dächern attraktiv sein.

Besonders bevorzugt sind aber Ausführungsformen, bei denen die Abschattung oder Verdunklung insbesondere bei einer hoch transparenten Scheibe, also einer Scheibe mit einer Lichttransmission Y (D65,2°) von wenigstens 91 %, vorzugsweise von wenigstens 92,5 % oder gar von wenigstens 93 %, über eine schaltbar aktivierbare abschattende oder verdunkelnde Folie oder Zwischenschicht im Verbund realisiert wird, wie es bei vielen Smart-Window-Anwendungen, z.B. bei Switchable-Window- oder Privacy-Window-Anwendungen, der Fall ist, die beispielsweise elektrochrome Schichten oder Flüssigkristall-Einheiten aufweisen.

Unter dem Fachausdruck "Smart Windows" versteht man "kluge" bzw. "mitdenkende" Fenster - nämlich Fenster mit Verglasungen, die ihre Eigenschaften nach den Bedürfnissen der Nutzer ändern können. So lassen sich Transparenz, Transluzenz, Farbe und Reflexionsgrad je nach den Umwelteinflüssen wie z.B. direkter Sonneneinstrahlung reversibel anpassen. Viele dieser meist schalt- und regelbaren Verglasungen basieren auf der Anwendung von Flüssigkristallen im Scheibenzwischenraum, also in dem durch den Scheibenverbund gebildeten Raum.

Energiegewinnende Fenster nutzen die Sonnenstrahlung zur Stromerzeugung. Schaltbare Fenster, sogenannte "Switchable Windows", bieten Sonnenschutz und helfen, Energiekosten und CO₂-Emissionen zu senken.

Sichtschutzfenster, die sofort von transparent auf durchscheinend wechseln, sogenannte "Privacy Windows", können Jalousien ersetzen und für Privatsphäre sorgen. Verdunkelnde und wärmedämmende Vorrichtungen werden bevorzugt durch elektrochrome Systeme oder "Suspended Particle Devices" realisiert. Sie wechseln im Einsatz von transparent zu dunkel, halten also die Sonne vom Innern des Gebäudes fern und helfen Energiekosten zu senken. Dagegen kommen Flüssigkristalllösungen eher als Privacy-Fenster zum Einsatz. Sie wechseln von durchsichtig zu weiß-opak.

Die erfindungsgemäß hohe Transmission im IR-Bereich unterstützt, dass in Verglasungen mit energiegewinnenden Fenstern ein hoher Wirkungsgrad erzielt wird.

Besonders in Systemen, in welchen die Glasscheibe als Waveguide die Photonen zu den außenliegenden Solarzellen leitet, ist eine Erhöhung der Energieausbeute möglich.

Die Scheibe gemäß Ausführungsformen, die für die Verwendung als äußere Schutzscheibe eines Funktionsdaches geeignet ist, kann in einem Funktionsdach für mobile Anwendungen, insbesondere für Fahrzeuge, bevorzugt für Landfahrzeuge, insbesondere straßengebundene Fahrzeuge wie vorzugsweise Last- oder Personenkraftfahrzeuge unabhängig vom Antrieb, vorzugsweise mit Elektro- oder Hybridantrieb, oder für Schienenfahrzeuge wie vorzugsweise Eisen- oder Straßenbahnwagen, verwendet werden.

Die Scheibe gemäß Ausführungsformen, die für die Verwendung als äußere Schutzscheibe eines Funktionsdaches geeignet ist, kann auch in einem Funktionsdach für statische Anwendungen, insbesondere für Gewächshaus- und Gebäudeverglasungen, insb. Brandschutzverglasungen, oder z.B. für Wintergärten, verwendet werden. Es ist bevorzugt, insbesondere bei Brandschutzverglasungen, die Scheibe als äußere Schutzscheibe für vertikale oder horizontale energieerzeugende Verglasungen zu verwenden.

Vorteilhaft kann die erfindungsgemäße Glasscheibe hergestellt werden in einem Verfahren zur Herstellung einer Glasscheibe, insbesondere einem Verfahren zur kontinuierlichen Herstellung einer Glasscheibe umfassend die Schritte
- Bereitstellen eines Gemenges umfassend Glasrohstoffe,
- Schmelzen des Gemenges unter Erhalt einer Glasschmelze,
- Einstellen der Viskosität der Glasschmelze,
- Überführen der Glasschmelze in eine Vorrichtung zum Heißformen, insbesondere mittels Ziehen, vorzugsweise Floaten,
- Heißformen des Glases, insbesondere Ziehen, vorzugsweise Floaten, unter Bildung eines Glasbandes
- Vereinzeln des heißgeformten Glasbandes unter Erhalt einer Glasscheibe.

Als zur Herstellung der erfindungsgemäßen Glasscheibe verwendetes Verfahren wird beispielhaft das Floatverfahren genannt, die Herstellung ist aber nicht auf ein solches beschränkt. Sie kann ohne Beschränkung der Allgemeinheit zum Beispiel durch ein Ziehverfahren, insb. ein Floatverfahren oder ein Down-Draw-Verfahren, beispielsweise ein Overflow-Fusion- oder ein Ziehdüsen-Verfahren, erfolgen.

Die Details der Ziehverfahren und der Anlagen für Ziehverfahren, so auch des Floatverfahrens und der Anlagen für Floatverfahren, sind dem Fachmann bekannt.

Besonders bevorzugt ist die Glasscheibe nach einer Ausführungsform als Floatglasscheibe ausgebildet.

Vorzugsweise wird das Glasband, insbesondere im Floatverfahren, nach der Heißformgebung und vor dem Vereinzeln einem Abkühlschritt unterworfen, bei dem seine Temperatur über einen Zeitraum von wenigstens 30 s im Bereich zwischen Tg + 20 K und Tg - 20 K liegt. Tg ist die Transformationstemperatur des Glases. Speziell in einem Floatverfahren, wo das Glasband von der Metallschmelze abgehoben und durch eine Dross-Box in einen Kühlofen weitertransportiert wird, unterscheiden sich die Temperaturen des Glasbandes in der Dross-Box und am Anfang des Kühlofens vorzugsweise um nicht mehr als 10 K.

Die mit dem genannten Verfahren zur Herstellung einer Glasscheibe, insbesondere einem Verfahren zur kontinuierlichen Herstellung einer Glasscheibe, hergestellte Scheibe weist vorzugsweise eine Temperatur bei der Viskosität von 10^{7,6} dPas von weniger als 1000 °C, bevorzugt von weniger als 850 °C, auf.

Damit ist sie, was für ihre Verwendung als äußere Schutzscheibe eines Funktionsdaches in vielen Ausführungsformen von Bedeutung ist, ausreichend gut 3D-verformbar.

So sind beispielsweise PKW-Funktionsdächer 3D-verformt. Bei PKW-Funktionsdächern ist - anders als beispielsweise bei normalen Photovoltaik(PV)-Dächern und ihren Abdeckscheiben - aufgrund ihrer 3D-Verformung bei Bruch kein modularer Austausch möglich. Hier kommt also die hohe mechanische Belastbarkeit der Scheibe besonders zum Tragen. Ihre 3D-Verformbarkeit stellt also eine wichtige Zusatzeigenschaft dar, denn in den Anwendungsfällen, wo sie relevant ist, ist ihre mechanischen Festigkeit gegenüber Aufprall, eine ihrer erfindungswesentlichen Eigenschaften, besonders wertvoll.

Der Schritt der 3D-Verformung der Scheibe erfolgt üblicherweise, nachdem sie zugeschnitten, kantenbearbeitet und ggf. bedruckt wurde.

In bestimmten Ausführungsformen, beispielsweise für Sicherheitsverglasungen, kann es von Interesse sein, die erfindungsgemäße Glasscheibe dem bekannten Prozess des chemischen oder thermischen Vorspannens zu unterwerfen. Der Fachmann weiß die entsprechenden Parameter für solche Verfahren auszuwählen. So weiß er beispielsweise hinsichtlich der unterschiedlichen Dicken die Vorspannprozesse zu adaptieren, insbesondere beim thermischen Vorspannen das Temperatur-Zeit-Profil anzupassen. So existiert für dünnere Dicken ein deutlich engeres Prozessfenster.

Die in der Offenbarung genannten Eigenschaftsangaben, insbesondere auch die zur mechanischen Festigkeit gegenüber Aufprall, beziehen sich aber auf nicht vorgespannte Glasscheiben.

Die Formulierung "die Scheibe besteht aus Glas" meint das Material der Scheibe und sagt nichts über etwaige Beschichtungen der Scheibe aus. Sowohl die Glas umfassende Scheibe als auch die aus Glas bestehende Scheibe können also eine oder mehrere ganz oder teilweise aufgebrachte Beschichtungen aufweisen. Solche Beschichtungen können beispielsweise sein:
- UV-blockende und/oder -reflektierende Schichten, beispielsweise enthaltend oder bestehend aus Titanoxid und/oder Siliciumoxid und/oder Aluminiumoxid und/oder Zinnoxid und/oder amorphem Kohlenstoff, z.B. DLC (diamond-like carbon)
- IR-blockende und/oder -reflektierende Schichten, z.B. metallische SilberSchichten
- Emaille-Schichten
- Antikratzbeschichtungen, beispielsweise enthaltend oder bestehend aus Titanoxid und/oder Siliciumoxid und/oder amorphem Kohlenstoff, z.B. DLC (diamond-like carbon)
- Transparente leitfähige Beschichtungen, beispielsweise enthaltend oder bestehend aus Indiumzinnoxid (ITO) und/oder fluordotiertem Zinnoxid (FTO) und/oder transparentem Zinkoxid (TZO). Die leitfähigen Beschichtungen können vollflächig oder strukturiert sein.

### Beispiele:

In der Tabelle 1 sind für Beispiel-Scheiben, und zwar zwei Ausführungsbeispiele (Bezeichnung beginnend mit A) und ein Vergleichsbeispiel (Bezeichnung beginnend mit V), verschiedene Eigenschaften angegeben. Beim Ausführungsbeispiel A1 handelt es sich um ein Borosilicatglas 3.3, also um ein Borosilicatglas mit einem Ausdehnungskoeffizienten CTE20-300 von 3,3 x 10⁻⁶/K. Beim Ausführungsbeispiel A2 handelt es sich um ein Borosilicatglas 4.0, also um ein Borosilicatglas mit einem Ausdehnungskoeffizienten CTE20-300 von 4,0 x 10⁻⁶/K. Beim Vergleichsbeispiel V1 handelt es sich um ein Kalk-Natron-Glas.

Die Gläser sind im Floatverfahren hergestellt.

Die Ausführungsbeispiele wurden bei ihrer Herstellung mit einer derartigen Ziehgeschwindigkeit gezogen, dass sie in Dross-Box und Kühlofen mindestens 30 s lang eine Temperatur zwischen Tg + 20 K und Tg - 20 K besaßen.

Die Scheiben wurden auf übliche Probenmaße verkleinert. An ihnen wurden die folgenden Eigenschaften bestimmt, die in der Tabelle 1 aufgeführt sind:
- die Dicke der Scheibe;
- die Transformationstemperatur Tg [°C];
- die Lichttransmission Y (D65,2°) in %, gemessen nach DIN 5033 im CIE Farbsystem an einer Probe des jeweiligen Beispiels mit der Dicke 5 mm;
- die Breite [nm] des Intervalls im Wellenlängenbereich zwischen 3 µm und 12 µm, in dem die Transmission an einer Probe mit der Dicke 5 mm des jew. Beispiels bei jeder Wellenlänge über 20% liegt ("IR-d");
- das Flächengewicht für die Dicke 1 mm ("d1") in kg/mm x m², wobei zur Ermittlung des jew. Flächengewichtes eine Scheibe der in der Tabelle genannten Dicke verwendet wurde und das Ergebnis auf die betrachtete Dicke 1 mm umgerechnet wurde;
- der "Ausgangs-Haze", also der Haze vor Durchführung von Belastungstests, bestimmt nach ASTM D1003:2013,
- der Haze, bestimmt nach ASTM D1003:2013, nach Durchführung des Sandblasting-Tests; durchgeführt mit folgenden Materialien und Einstellungen:

| | | |
|---|---|---|
| • | Temperatur: | 23 °C ± 2 °C |
| • | Relative Luftfeuchtigkeit: | < 30 % |
| • | Windgeschwindigkeit: | 20 m/s |
| • | Sandkonzentration: | (2.2 ± 0.5) g/m³ |
| • | Sand-Produktbezeichnung: | Quarzwerke WF31 |
| • | Testseite: | 1 |
| • | Testdauer: | pro Probe 30 (Gruppe A) oder 60 (Gruppe B) oder 90 (Gruppe C) Minuten |

- der Haze, bestimmt nach ASTM D1003:2013, nach Durchführung des Gravel-Tests nach DIN EN ISO 20567-1:2017-07[a], durchgeführt mit folgenden Materialien und Einstellungen:

| | | |
|---|---|---|
| ∘ | Beschusszeit: | 2 x 10 s ± 2 s |
| ∘ | Beschussmaterial: | Harteisen-Granulat gemäß DIN EN ISO 11124-2 |
| ∘ | Granulatmenge: | 2 x 500 g |
| ∘ | Granulatgröße: | 3,55-5,00 mm gemäß DIN EN ISO 11125-2 und DIN EN ISO 565 |
| ∘ | Granulathersteller: | Eisenwerk Würth |
| ∘ | Druck: | Methode A: 1,0 ± 0,1 bar; Methode B: 2,0 ± 0,1bar |
| ∘ | Aufprallwinkel: | 54° |
| ∘ | Testtemperatur: | 24 °C ± 1 °C |
| ∘ | Feuchtigkeit: | 50% ± 4% |
| ∘ | Vorbehandlung: | mindestens 16 h bei 23 °C und 50% relativer Luftfeuchtigkeit |

| | | |
|---|---|---|
| ∘ | Abstand zwischen Granulatbeschleunigungsrohr und Probenmitte: | 290 ± 1 mm |

**Tabelle 1**

| | A1 | A2 | V1 |
|---|---|---|---|
| d [mm] | 3,8 (für Sandblasting-Test: 7,5; für Y und IR-d: 5) | 3,8 (für Sandblasting-Test: 8; für Y und IR-d: 5) | 4,0 (für Sandblasting-Test: 8; für Y und IR-d: 5) |
| Tg [°C] | 530 | 590 | 540 |
| Y (D65,2°) [%] | 93,1 | 92,9 | 91,0 |
| IR-d [nm] | 220 | 175 | 0 |
| d1 [kg/mm x m²] | 2.2 | 2.35 | 2.5 |
| Ausgangs-Haze [%] | 0,1 | 0,2 | 0,2 |
| Haze [%] nach Sandblasting-Test, 30 min | 4,2 | 4,8 | 11,5 |
| Haze [%] nach Sandblasting-Test, 60 min | 9,2 | 9,7 | 19,4 |
| Haze [%] nach Sandblasting-Test, 90 min | 13,7 | 16,0 | 30,3 |
| Haze [%] nach Gravel-Test, Methode A | 2,1 | 2,1 | 5,6 |
| Haze [%] nach Gravel-Test, Methode B | 4,3 | 4,7 | 12,7 |

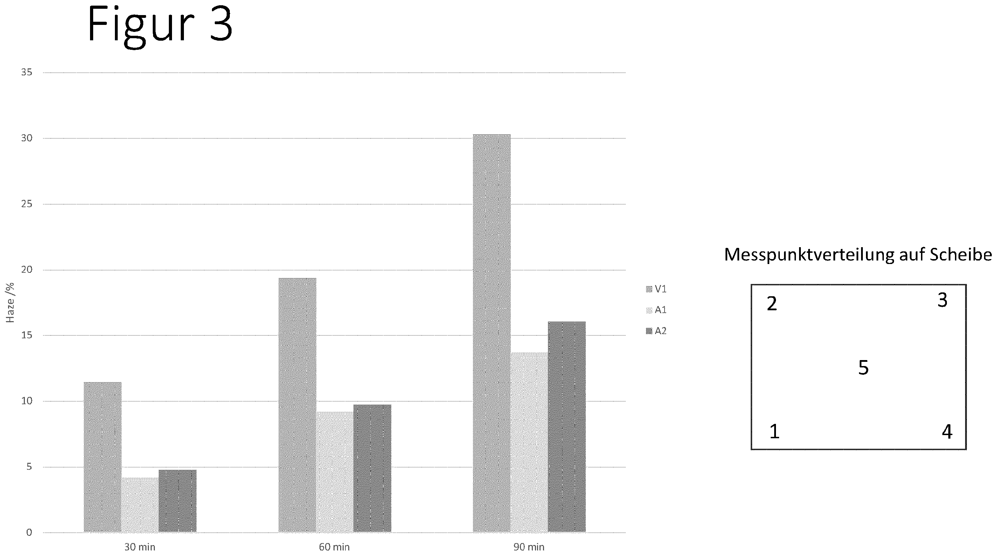

Die für den Sandblasting-Test angegebenen Haze-Werte sind jeweils der Mittelwert aus fünf Messungen auf einer getesteten Scheibe, wobei die Messpunkte gemäß der Darstellung in Figur 3 etwa in der Mitte der Probe und in der Nähe jeder der vier Ecken gewählt wurden.

Die für den Gravel-Test angegebenen Haze-Werte sind jeweils der Mittelwert aus der Anzahl getesteter Scheiben, wobei pro getesteter Scheibe fünf Messungen durchgeführt wurden, wobei die Messpunkte etwa in der Mitte der Probe und in der Nähe jeder der vier Ecken gewählt wurden. Für V1 wurde bei Methode A eine Scheibe getestet, bei Methode B zwei. Für A1 und A2 wurden bei Methode A je zwei Scheiben und bei Methode B je vier Scheiben getestet.

Mit Haze-Werten unter 10 bzw. unter 15 bzw. unter 25 (Sandblasting-Test für 30, 60, 90 min) und unter 4 (Gravel-Test 1 bar) bzw. unter 8 (Gravel-Test 2 bar) haben die Ausführungsbeispiele beide Tests bestanden und weisen sie die geforderte Beständigkeit gegenüber Steinschlag und gegenüber Abrasion auf und damit auch die erfindungswesentliche mechanische Festigkeit gegenüber Aufprall.

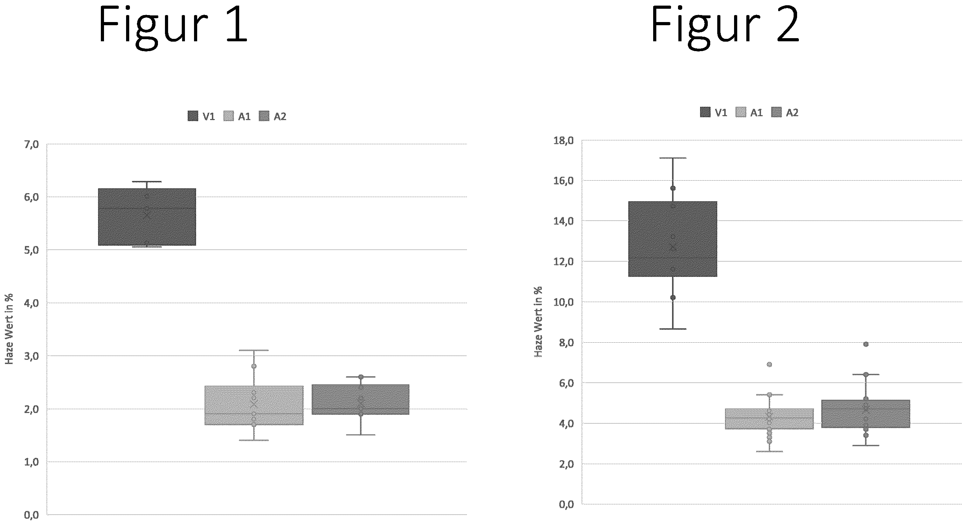

Die graphische Darstellung der Haze-Werte findet sich ich den Figuren 1 bis 3:
Figur 1 zeigt als Box-Plot-Diagramm für V1, A1 und A2 die Ergebnisse der Haze-Messungen nach dem Gravel-Test Methode A.
Figur 2 zeigt als Box-Plot-Diagramm für V1, A1 und A2 die Ergebnisse der Haze-Messungen nach dem Gravel-Test Methode B.
Figur 3 zeigt für V1 und A1 die Ergebnisse der Haze-Messungen nach dem Sandblasting-Test. Figur 3 zeigt außerdem die Verteilung der Messpunkte auf einer Scheibe.

Als weiteres mögliches Maß für die Steinschlagfestigkeit wurde gemäß DIN EN ISO 20567-1:2017-07 der Grad der Schädigung nach Durchführung des Gravel-Tests anhand der Auswertung der Schadensfläche bestimmt. Dabei wurde ein sog. charakteristischer Wert ermittelt, der jeweils einem bestimmten Anteil [%] der beschädigten Fläche zugeordnet ist.

**Tabelle 2**

| Methode | V1 | V1 | A1 | A1 | A2 | A2 |
|---|---|---|---|---|---|---|
| | charakt. Wert | beschädigte Fläche [%] | charakt. Wert | beschädigte Fläche [%] | charakt. Wert | beschädigte Fläche [%] |
| A (1 bar) | 2,5 | 10,7 | 1,0 | 1 | 1,0 | 1 |
| B (2 bar) | 3,0 | 19,2 | 2,0 | 5,5 | 2,0 | 5,5 |

Auch an diesen Werten sieht man, dass die Steinschlagbeständigkeit der Ausführungsbeispiele viel höher ist als die des Vergleichsbeispiels.

Die Scheibe ist geeignet für die Verwendung als äußere Schutzscheibe einer Funktionsverglasung und wird vorzugsweise auch dafür verwendet.

Bevorzugt ist die Verwendung als äußere Schutzscheibe eines thermischen Daches oder eines Panoramadaches oder eines ästhetischen Daches oder eines Switchable Windows oder eines Solardaches.

Gegenstand der Erfindung ist auch eine Funktionsverglasung, also ein Funktionsdach, mit einer äußeren Schutzscheibe gemäß der Offenbarung. Es weist neben der äußeren Schutzscheibe eine innere Scheibe, optional weitere Scheiben, sowie eine Funktionseinheit auf, die mindestens ein Funktionselement, insbesondere eine Funktionsschicht umfasst. Funktionsschichten können als Beschichtung oder als Folie ausgebildet sein.

Als Funktionsschichten seien hier beispielhaft genannt:
- Transparente leitfähige Beschichtungen, beispielsweise enthaltend oder bestehend aus Indiumzinnoxid (ITO) und/oder fluordotiertem Zinnoxid (FTO) und/oder transparentem Zinkoxid (TZO), die vollflächig oder auch strukturiert sein können
- Graukeile
- Kunststofffolien mit schwingungsdämpfender Funktion
- Schaltbare Folien
- Energieumwandelnde Schichten

Gegenstand der Erfindung ist auch ein Funktionsdach, das als thermisches Dach ausgebildet ist.

Unter einem thermischen Dach wird in dieser Offenbarung folgendes verstanden:
eine Funktionsverglasung, die Strahlung, vorzugsweise IR-Strahlung, in eine Strahlung niedrigerer Wellenlänge, vorzugswiese Lichtenergie, umwandelt und die dazu notwendige Energie einem Wärmereservoir entzieht, bevorzugt Innenräumen von Gebäuden oder Fahrzeugen.

Das erfindungsgemäße thermische Dach zeichnet sich insbesondere dadurch aus, dass es eine Funktionseinheit mit einem Funktionselement, insbesondere einer Funktionsschicht, enthält, die in der Lage ist, IR-Strahlung, also Wärmeenergie, in Lichtenergie, umzuwandeln. Dabei stammt die Wärmeenergie aus dem durch die äußere Schutzscheibe und weitere Abgrenzungen, insbesondere Scheiben oder Wände, umschlossenen Raum. Der Raum, dem die Wärme entzogen wird, meist der Innenraum der Einheit, also insbesondere des Fahrzeugs oder Gebäudes oder Gebäudeteils, wird also gekühlt.

Die äußere Schutzscheibe im thermischen Dach weist eine Dicke von mindestens 0,5 mm bis höchstens 7,5 mm, bevorzugt mindestens 1 mm und höchstens 4 mm, besonders bevorzugt 1,75 mm bis 3 mm auf.,

Die Funktionsschicht bzw. das Schichtpaket einer sog. Down-Conversion-Kühlung kann als Folie ausgebildet und angeklebt sein. Es kann auch direkt auf die leitfähige Beschichtung, die strukturiert sein kann, aufgebracht sein.

Gegenstand der Erfindung ist auch ein Funktionsdach, das als Panoramadach ausgebildet ist.

Unter einem Panoramadach wird in dieser Offenbarung eine Glasfläche in einem Fahrzeug verstanden, die Windschutzscheibe und Dachfenster kombiniert.

Das erfindungsgemäße Panoramadach zeichnet sich dadurch aus, dass die äußere Schutzscheibe eine Länge von mindestens 1200 mm, bevorzugt mindestens 3000 mm, und höchstens 4500 mm, eine Breite von mindestens 1200 mm, bevorzugt mindestens 2500 mm, und höchstens 3000 mm mm und eine Dicke von 0,5 mm bis 7,5 mm, bevorzugt bis 4 mm, besonders bevorzugt bis 3,8 mm aufweist. Ein bevorzugtes Format ist eine Fläche von mindestens 3000 x 2500 mm².

Das Panoramadach weist ähnlich wie eine Windschutzscheibe einen sogenannten Graukeil auf. Ein Graukeil ist ein getönter Blendschutzstreifen. Er kann als elektrische Blende, deren Lichtdurchlässigkeit elektrisch schaltbar ist, ausgebildet sein. Er kann trotz seines Namens statt einer grauen Tönung auch andere Tönungen beispielsweise eine blaue oder grüne Tönung aufweisen. Bei einer reinen Windschutzscheibe befindet er sich an ihrem oberen Rand. Beim Panoramadach befindet er sich im Dachfensterbereich und erstreckt sich in den oberen Bereich des Windschutzscheibenbereichs. Er ist in den als Funktionseinheit ausgebildeten Mehr-, vorzugsweise Zweischeibenverbund integriert. Er dient dazu,
die Sonneneinstrahlung und die damit verbundene Erwärmung des Fahrzeugs zu reduzieren. Er beeinträchtigt dabei nicht den Sichtbereich.

Um den Fahrgastraum von störenden Außengeräuschen abzuschirmen, werden bei Fahrzeugen mit Metalldächern Antidröhnmatten eingesetzt. Bei Verglasungen ist das nicht möglich, da sonst die transparente Funktion der Verglasung verloren geht. Hier muss auf spezielle Kunststofffolien als Funktionszwischenschicht zurückgegriffen werden. Das Panoramadach weist daher als Funktionszwischenschicht eine Kunststofffolie mit schwingungsdämpfender Funktion auf. So sollen auftretende Schwingungen zwischen 50 Hz und 20 kHz gedämpft werden.

Gegenstand der Erfindung ist auch ein Funktionsdach, das als ästhetisches Dach ausgebildet ist.

Unter einem ästhetischen Dach wird in dieser Offenbarung folgendes verstanden: eine Funktionsverglasung, die eine Funktionseinheit enthält, bei der verschiedene Funktionselemente in ihrer, meist künstlerischen, Gestaltung auf einen visuellen Eindruck abzielen, zum Beispiel Lichtpunkte, Muster, Verdunklungsflecken, schaltbare Module.

Das erfindungsgemäße ästhetische Dach zeichnet sich dadurch aus, dass seine äußere Glasscheibe eine Lichttransmission Y (D65,2°) von wenigstens 92,5 %, bevorzugt von wenigstens 93 %, bezogen auf eine Glasscheibe mit einer Dicke von 5 mm, aufweist und dass seine Funktionseinheit als Funktionselement lichtemittierende Einrichtungen aufweist. Diese sind vorzugsweise in den als Funktionseinheit ausgebildeten Mehr-, bevorzugt Zweischeibenverbund integriert. Seine lichtemittierenden Einrichtungen erzeugen eine dekorative und/oder funktionale Beleuchtung. Ein Beispiel für lichtemittierende Einrichtungen sind organische lichtemittierende Dioden, sog. OLEDs. Ein solches ästhetisches Dach kann beispielsweise in Fahrzeugen, also in einer mobilen Anwendung, oder in Gebäuden, also in einer statischen Anwendung, integriert sein. Von der Art der Anwendung hängt ab, welche Formate bevorzugt sind. Für statische Anwendungen, insbesondere für Gebäudeverglasungen, sind Formate von 3700 x 2300 mm² bis 4200 × 2450 mm² oder bis 4000 x 2450 mm² und/oder Dicken von 2 mm bis 7,5 mm bevorzugt.

Gegenstand der Erfindung ist auch ein Funktionsdach, das als Switchable Window ausgebildet ist. Unter einem Switchable Window wird hier ein Funktionsdach verstanden, bei dem die Funktion der Funktionseinheit elektrisch zu- und abschaltbar ausgebildet ist, wobei zur Elektroenergieversorgung die äußere Schutzscheibe eine transparente leitfähige Beschichtung aufweist oder auf diese aufgebracht ist.

Das Switchable Window zeichnet sich insbesondere dadurch aus, dass in seiner Funktionseinheit als Funktionselement zwischen der äußeren Schutzscheibe und der Innenscheibe eine schaltbare Folie angeordnet ist und dass auf der zur Folie gerichteten Seite der äußeren Schutzscheibe eine transparente leitfähige Beschichtung aufgebracht ist und dass die äußere Schutzscheibe eine Lichttransmission Y (D65,2°) von wenigstens 92,5 %, bevorzugt von wenigstens 93 %, bezogen auf eine Glasscheibe mit einer Dicke von 5 mm, aufweist.

Gegenstand der Erfindung ist auch ein Funktionsdach, das als Solardach ausgebildet ist. Unter einem Solardach werden in dieser Offenbarung Funktionsdächer mit Funktionseinheiten verstanden, die in der Lage sind, Sonnenenergie in elektrische Energie umzuwandeln.

Das erfindungsgemäße Solardach zeichnet sich dadurch aus, dass die Funktionseinheit als Funktionselement ein elektrisches Bauelement aufweist, welches Strahlungsenergie, vorzugsweise UV- und/oder VIS- und/oder IR-Strahlung direkt in elektrische Energie umwandelt und dass die äußere Schutzscheibe eine Lichttransmission Y (D65,2°) von wenigstens 92,5 %, bevorzugt von wenigstens 93 %, bezogen auf eine Glasscheibe mit einer Dicke von 5 mm, aufweist.

Das Solardach kann auf verschiedene Weise realisiert werden: z.B. indem sich die Solarzelle direkt unter der äußeren Schutzscheibe ohne Kontakt zu ihr befindet, wobei die Glasscheibe ihre Funktion als Schutz übernimmt. Ein Kontakt zwischen Solarzelle und Schutzscheibe ist dabei nicht nötig. Oder indem die äußere Schutzscheibe transparent leitfähig beschichtet ist und neben ihrer Schutzfunktion auch die Funktion der Stromableitung übernimmt.

All diesen Funktionsdächern ist gemeinsam, dass die Eigenschaft der äußeren Schutzscheibe, dass ihre Transmission im Wellenlängenbereich zwischen 3 µm und 12 µm bei einer Dicke der Scheibe von 4 mm in mindestens einem Intervall von mindestens 100 nm bei jeder Wellenlänge über 20% liegt, von besonderer Bedeutung ist, denn dadurch kann im Anwendungsfall das unerwünschte Aufheizen der Scheibe und des Funktionsdaches und damit auch der Funktionseinheit vermieden werden.

All diesen Funktionsdächern ist gemeinsam, dass die mechanische Festigkeit gegenüber Aufprall der äußeren Schutzscheibe von besonderer Bedeutung ist, da sie im Anwendungsfall der Gefahr hoher Aufpralllasten ausgesetzt sind.

## Patentansprüche

1. Scheibe zur Verwendung als äußere Schutzscheibe eines Funktionsdaches, wobei sie Glas umfasst oder aus Glas besteht und
wobei sie mechanische Festigkeit gegenüber Aufprall aufweist und
wobei sie ein Flächengewicht (d1) von höchstens 2,45 kg/m² aufweist und
wobei bei einer Dicke der Scheibe von 5 mm ihre Transmission im Wellenlängenbereich zwischen 3 µm und 12 µm in mindestens einem Intervall von mindestens 100 nm bei jeder Wellenlänge über 20% liegt.

2. Scheibe nach Anspruch 1, **dadurch gekennzeichnet, dass** sie einen Ausdehnungskoeffizienten CTE20-300 zwischen 2,5 x 10⁻⁶/K und 5.2 x 10⁻⁶/K, besonders bevorzugt 3,3 ± 0,1 x 10⁻⁶/K aufweist,
und/oder eine ausreichende chemische Beständigkeit, insbesondere eine gute hydrolytische Beständigkeit und/oder eine gute Säurebeständigkeit aufweist und/oder ein Flächengewicht (d1) von weniger als 2,23 kg/m² aufweist.

3. Scheibe nach Anspruch 1 oder 2, **dadurch gekennzeichnet, dass** bei einer Dicke der Scheibe von 5 mm ihre Transmission im Wellenlängenbereich zwischen 3 µm und 12 µm in mindestens einem Intervall von 145 nm, bevorzugt von 170 nm, besonders bevorzugt von 200 mm, bei jeder Wellenlänge über 20% liegt.

4. Scheibe nach einem der Ansprüche 1 bis 3, **dadurch gekennzeichnet, dass** sie Borosilicatglas umfasst oder aus Borosilicatglas besteht.

5. Scheibe nach Anspruch 4, **dadurch gekennzeichnet, dass** sie in Gew.-% auf Oxidbasis
SiO₂ 70 - 87
B₂O₃ 7 - 25
Na₂O + K₂O 0,5 - 9
Al₂O₃ 0 - 7
CaO 0 - 3
MgO 0 - 2
umfasst

6. Scheibe nach Anspruch 4, **dadurch gekennzeichnet, dass** sie in Gew.-% auf Oxidbasis
SiO₂ 70 - 86
Al₂O₃ 0 - 5
B₂O₃ 9,0 - 25
Na₂O 0,5 - 5,0
K₂O 0 - 1,0
Li₂O 0 - 1,0
umfasst.

7. Scheibe nach Anspruch 4, **dadurch gekennzeichnet, dass** sie in Gew.-% auf Oxidbasis
SiO₂ 78,3 - 81,0
B₂O₃ 9,0 - 13,0
Al₂O₃ 3,5 - 5,3
Na₂O 3,5 - 6,5
K₂O 0 - 2,0
CaO 0 - 2,0
umfasst.

8. Scheibe nach einem der Ansprüche 1 bis 7, **dadurch gekennzeichnet, dass** sie eine Dicke von 0,5 mm bis 7,5 mm besitzt, bevorzugt eine Dicke von 1 mm bis 4 mm, besonders bevorzugt eine Dicke von 1,75 mm bis 3,8 mm, ganz besonders bevorzugt eine Dicke von 1,8 bis 3 mm.

9. Verwendung der Scheibe nach einem der Ansprüche 1 bis 8 als äußere Schutzscheibe in einem Funktionsdach für mobile Anwendungen, insbesondere für Fahrzeuge, bevorzugt für Landfahrzeuge, insbesondere straßengebundene Fahrzeuge wie vorzugsweise Last- oder Personenkraftfahrzeuge unabhängig vom Antrieb, vorzugsweise mit Elektro- oder Hybridantrieb, oder für Schienenfahrzeuge wie vorzugsweise Eisen- oder Straßenbahnwagen.

10. Verwendung der Scheibe nach einem der Ansprüche 1 bis 8 als äußere Schutzscheibe in einem Funktionsdach für statische Anwendungen, insbesondere für Gewächshaus- und Gebäudeverglasungen, insb. Brandschutzverglasungen, oder für Wintergärten.

11. Funktionsdach mit einer äußeren Schutzscheibe gemäß einem der Ansprüche 1 bis 8, mit einer inneren Scheibe, optional weiteren Scheiben, sowie mit einer Funktionseinheit umfassend mindestens ein Funktionselement, insbesondere eine Funktionsschicht.

12. Funktionsdach nach Anspruch 11, das als thermisches Dach ausgebildet ist,
**dadurch gekennzeichnet, dass**
die Funktionseinheit eine Funktionsschicht enthält, die in der Lage ist, IR-Strahlung, also Wärmeenergie, in Lichtenergie, umzuwandeln, wobei die Wärmeenergie aus dem durch die äußere Schutzscheibe und weiteren Abgrenzungen umschlossenen Raum stammt,
und die äußere Schutzscheibe eine Dicke von mindestens 0,5 mm bis höchstens 7,5 mm, bevorzugt mindestens 1 mm und höchstens 4 mm, besonders bevorzugt 1,75 mm bis 3 mm aufweist.

13. Funktionsdach nach Anspruch 11, das als Panoramadach ausgebildet ist, **dadurch gekennzeichnet, dass**
die äußere Schutzscheibe eine Länge von mindestens 1200 mm, bevorzugt mindestens 3000 mm, und höchstens 4500 mm, eine Breite von mindestens 1200 mm, bevorzugt mindestens 2500 mm, und höchstens 3000 mm und eine Dicke von 0,5 mm bis 7,5 mm, bevorzugt bis 4 mm, besonders bevorzugt bis 3,8 mm aufweist und die Funktionseinheit einen Graukeil als Sonnenabschattung und eine Kunststofffolie als Funktionszwischenschicht mit schwingungsdämpfender Funktion aufweist.

14. Funktionsdach nach Anspruch 11, das als ästhetisches Dach ausgebildet ist, **dadurch gekennzeichnet, dass**
seine Funktionseinheit als Funktionselement lichtemittierende Einrichtungen aufweist
und dass seine äußere Schutzscheibe eine Lichttransmission Y (D65,2°) von wenigstens 92,5 %, bevorzugt von wenigstens 93 %, bezogen auf eine Glasscheibe mit einer Dicke von 5 mm, aufweist.

15. Funktionsdach nach Anspruch 11, das als Switchable Window ausgebildet ist,
**dadurch gekennzeichnet, dass**
in der Funktionseinheit als Funktionselement zwischen der äußeren Schutzscheibe und der Innenscheibe eine schaltbare Folie angeordnet ist und dass auf der zur Folie gerichteten Seite der äußeren Schutzscheibe eine transparente leitfähige Beschichtung aufgebracht ist,
und dass die äußere Schutzscheibe eine Lichttransmission Y (D65,2°) von wenigstens 92,5 %, bevorzugt von wenigstens 93 %, bezogen auf eine Glasscheibe mit einer Dicke von 5 mm, aufweist.

16. Funktionsdach nach Anspruch 11, das als Solardach ausgebildet ist, **dadurch gekennzeichnet, dass** die Funktionseinheit als Funktionselement ein elektrisches Bauelement aufweist, das Strahlungsenergie direkt in elektrische Energie umwandelt,
und dass die äußere Schutzscheibe eine Lichttransmission Y (D65,2°) von wenigstens 92,5 %, bevorzugt von wenigstens 93 %, bezogen auf eine Glasscheibe mit einer Dicke von 5 mm, aufweist
